# EUROPEAN PATENT APPLICATION

(11) **EP 3 712 045 A1**
(43) Date of publication of application: **23.09.2020**
(21) Application number: 19020399.2
(22) Date of filing: 25.06.2019
(51) Int. Cl.: B62D 53/06, B62D 21/14, B62D 21/20

(54) **A MECHANICAL EXTENSION ASSEMBLY DEVELOPED FOR CONTAINER TRAILERS**

(30) Priority: 20.03.2019 TR 201904189
(71) Applicant: Durmus Özgül Otomotiv Ithalat Ihracat Sanayi Ve Ticaret Anonim Sirketi, Selçuklu, Konya (TR)
(72) Inventor: ÖZGÜL, Dumus, Selçuklu, Konya (TR)
(74) Representative: Martin Santos, Victoria Sofia

(57) **Abstract**

The invention relates to a telescopic main chassis (100) having a central chassis (110), a front chassis (120) and a rear chassis (130) for container trailers used for transporting the containers of different sizes such as 20, 30, 40 and 45 feet and is characterized in that it relates to a mechanical extension assembly (200) configured for extending and retracting the container trailer synchronously with the movement of the trailer.

## Description

### TECHNICAL FIELD

The invention relates to a telescopic main chassis having a central chassis, a front chassis and a rear chassis for container trailers used for transporting the containers of different sizes such as 20, 30, 40 and 45 feet.

In particular, the invention is relates to a main chassis having a central chassis, a front chassis and a rear chassis for container trailers used for transporting the containers of different sizes such as 20, 30, 40 and 45 feet.

The main chassis comprising the following which are configured to provide extending and retracting of the container trailer synchronously with the movement of the trailer:
- an operating cavity formed on the upper and lower sections of the rear protrusion within the front chassis,
- an operating cavity formed on the upper and lower sections facing each other of the fork-shaped rear protrusions of the rear chassis,
- a mechanical extension assembly providing the extension/retraction of the main chassis by, in a synchronous way with the movement of the trailer, the forward/backward movement of the front chassis which is connected to the front engagement cavity within the central chassis from the rear protrusion thereof and the rear chassis which is connected to the rear engagement cavity within the central chassis from the front protrusion thereof by the movement of the rack gears which are individually connected to the inner section of the rear protrusion within the front chassis and to the inner sections of the front protrusion with a NPI-profile within the rear chassis on the side pinion gears and the central pinion gears which are located on the shaft provided by the connection of the central chassis to the central inner section through bearings.

### PRIOR ART

Today, containers are used which are manufactured for transporting goods in a productive, safe and damage free manner within the transportation system of international standards. The containers are transported by the sea, railway and road transport vehicles without evacuating the goods therein; and these can be of different sizes such as 20, 30, 40, 45 FT (feet).

In the state of the art, there are different containers designed for each container sizes for transporting containers of different sizes in road transport. When the container to be transported is of 20 ft., the container trailers with the transport capacity of 20 ft. are used and when the container to be transported is of 30 ft., the container trailers with the transport capacity of 30 ft. are used. This leads to a variety of costs such as trailer supply and maintenance.

In order to eliminate the disadvantage mentioned above, the container trailers are developed which have a telescopic main chassis consisting of a central chassis, a front chassis and a rear chassis. These telescopic container trailers may transport containers of different sizes such as 20, 30, 40 and 45 ft. and this eliminates the need for using a different container trailer for each container of different sizes.

In one of the telescopic container structures designed in the state of the art, the pressurized air filled into the air tubes reaches the pneumatic cylinder by operating the vehicle. At this stage, the rear chassis moves by the contact of the metallic surfaces with each other on the central chassis and extend from the rear section. When the front chassis is mounted on the central chassis, the extension of the front chassis is provided by the contact of the metallic surfaces with each other and the forward movement of the trailer.

In another telescopic container used in the state of the art, the rear chassis is mounted to the central chassis. The mechanical lever mounted to the central chassis provides extension by being rotated until the stroke is completed by using man power and the extension of the rear chassis is obtained. When the front chassis is mounted on the central chassis, the opening of the front chassis, therefore the extension of the front chassis is obtained by the contact of the metallic surfaces with each other and by moving the trailer forwards.

In the above-mentioned telescopic container trailers used in the state of the art, as the metallic surfaces move by contacting each other
- failures may occur such as freezing/overheating due to climate conditions,
- fuel loss may occur due to excessive air usage,
- material deformation due to friction, and therefore shortens the life of the chassis,
- repair and maintenance costs of the chassis increase.

Consequently, there is a need for a development within the related technical field due to the drawbacks encountered in the state of the art and mentioned above.

### OBJECT OF THE INVENTION

Due to the drawbacks within the state of the art, the present invention aims at solving all of the drawbacks mentioned.

The object of the invention is to provide the following which are configured to provide extending and retracting of the container trailer synchronously with the movement of the trailer on the main chassis having a central chassis, a front chassis and a rear chassis for container trailers used for transporting the containers of different sizes such as 20, 30, 40 and 45 feet:
- an operating cavity on the upper and lower sections of the rear protrusion within the front chassis,
- an operating cavity on the upper and lower sections facing each other of the fork-shaped rear protrusions of the rear chassis,
- a mechanical extension assembly providing the extension/retraction of the main chassis by, in a synchronous way with the movement of the trailer, the forward/backward movement of the front chassis which is connected to the front engagement cavity within the central chassis from the rear protrusion thereof and the rear chassis which is connected to the rear engagement cavity within the central chassis from the front protrusion thereof by the movement of the rack gears which are individually connected to the inner section of the rear protrusion within the front chassis and to the inner sections of the front protrusion with a NPI-profile within the rear chassis on the side pinion gears and the central pinion gears which are located on the shaft connected to the central inner section of the central chassis through the bearings.

Thanks to the mechanical extension assembly of the present invention which enables extending/retracting of the container trailer:
- the synchronous extension/retraction of the main chassis is obtained in a short time by only using the trailer power without the need of man power, air, hydraulic and electrical power; and thus, loading time of the containers to the container trailers shortens,
- failures which may occur due to climate conditions are avoided in the telescopic container trailers used in the existing systems,
- fuel saving is provided as no air is used,
- no material deformation occurs as the metallic surfaces do not contact each other, and thus, the lifetime of the main chassis extends,
- due to the work safety rules, the user should not be within the loading area. Thanks to the extension assembly of the invention, the user can adjust the suitable container size of the main chassis from the inside of the cabin before going to the loading area,
- the maintenance period, labour, material and associated costs due to the failures encountered in the state of the art are reduced.

### DESCRIPTION OF THE DRAWINGS

Fig. 1 is the representative perspective view of the demounted main chassis of the container trailer onto which the extension assembly of the invention is connected,

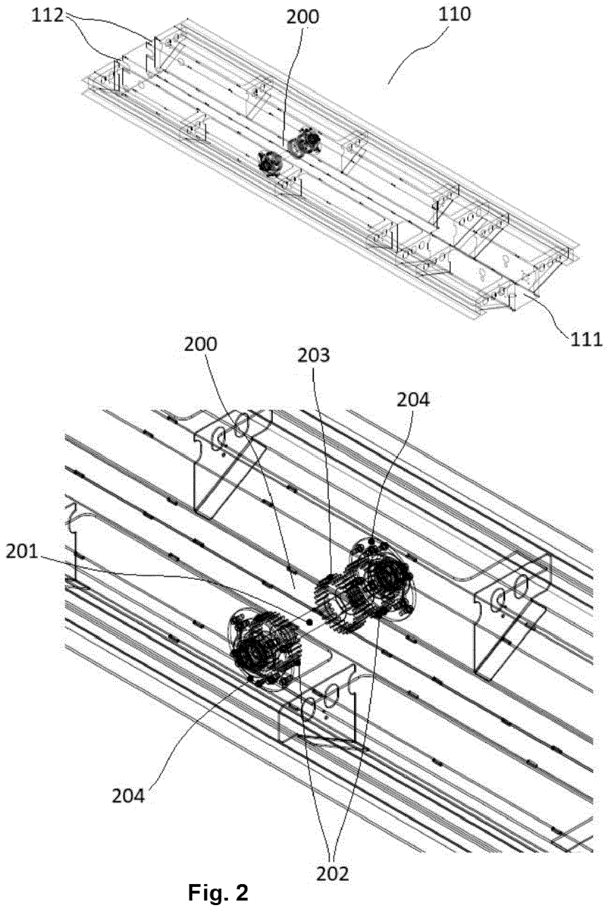

Fig. 2 is the representative perspective general and detailed view of the central chassis belonging to the main chassis of the container trailer,

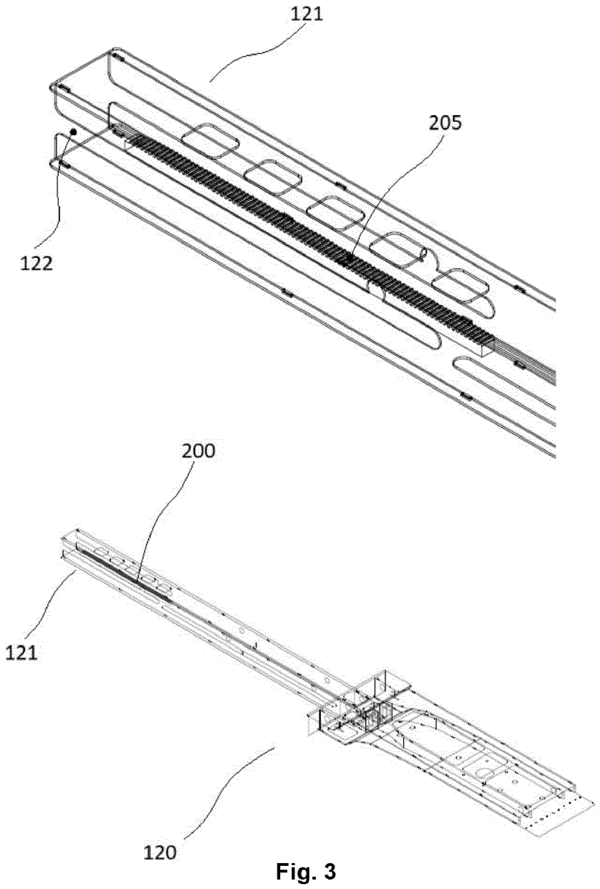

Fig. 3 is the representative perspective general and detailed view of the front chassis belonging to the main chassis of the container trailer,

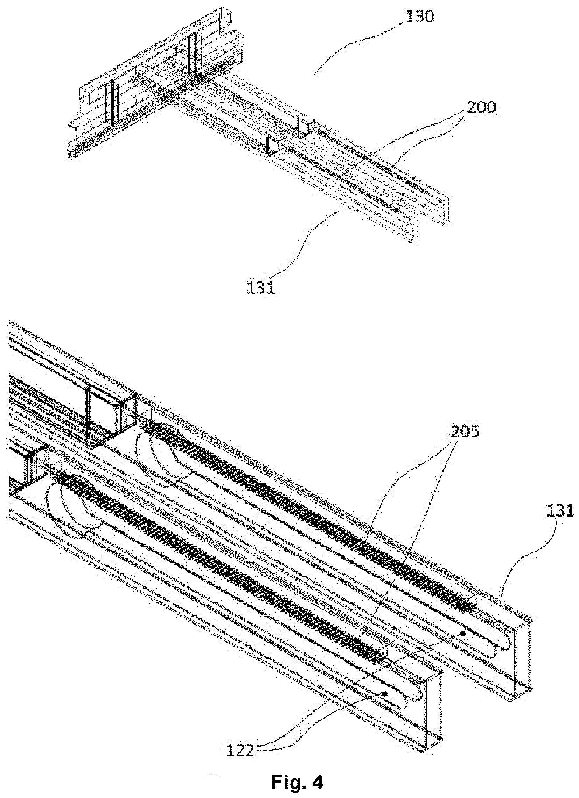

Fig. 4 is the representative perspective general and detailed view of the rear chassis belonging to the main chassis of the container trailer.

### REFERENCE NUMERALS

- **100.**: Main chassis
**110.** Central chassis
**111.** Front engagement cavity
**112.** Rear engagement cavity
**120.** Front chassis
**121.** Rear protrusion
**122.** Operating cavity
**130.** Rear chassis
**131.** Front protrusion
- **200.**: Extension assembly
**201.** Shaft
**202.** Side pinion gear
**203.** Central pinion gear
**204.** Bearing
**205.** Rack gear

### DETAILED DESCRIPTION OF THE INVENTION

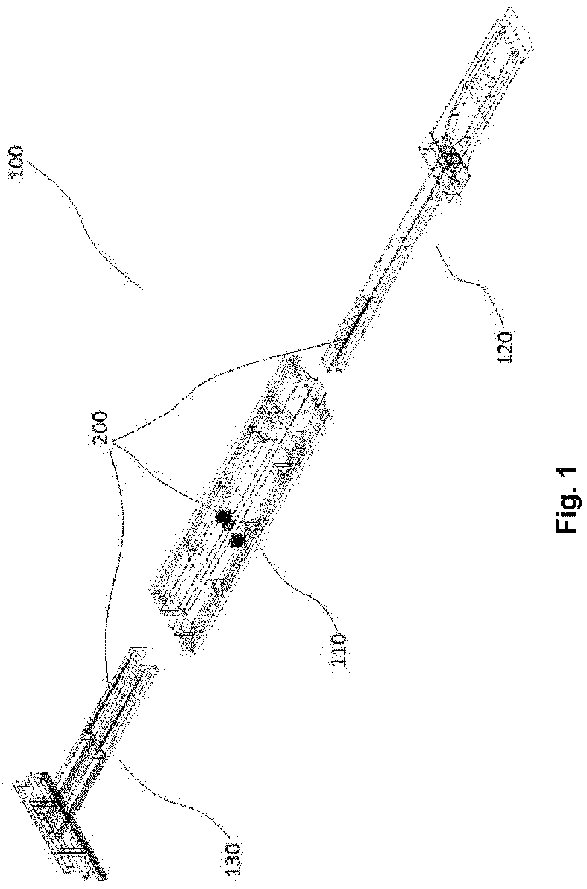

In Fig. 1, there is shown a representative perspective view of the demounted main chassis (100) of the container trailer onto which the extension assembly (200) of the invention is connected, which transports the container of different sizes such as 20, 30, 40 and 45 feet.

The main chassis (100) of the container trailer consists of:
- a central chassis (110), on the front section of which is located a front engagement cavity (111) and on the rear section of which is located a rear engagement cavity (112),
- a front chassis (120), on the front section of which is located a front protrusion (121) and on the upper and lower sections of the front protrusion of which is located an operating cavity (122) of the present invention,
- a rear chassis (130), on the rear section of which is located a rear protrusion (131) with a NPI- profile and on the sections facing each other of the rear protrusions (131) of which is located an operating cavity (122) of the present invention,
- a mechanical extension assembly (200) which provides the extension/retraction of the main chassis (A) by the forward/backward movement of the front chassis (120) on the front section of the central chassis (110) and of the rear chassis (130) on the rear section.

The extension assembly (200) of the present invention consists of:
- a shaft (201), side pinion gears (202) connected to the sides of the shaft (201), central pinion gears (203) connected to the center of the shaft (201), bearings (204) and the rack gears (205).

In the mounting process of the extension assembly (200) of the present invention, the shaft (201) is mounted into the central inner section of the central chassis (110) through the bearings (204) when the central and side pinion gears (202-203) are connected thereon. The rack gears (205) is mounted into the inner section of the rear protrusion (121) within the front chassis (120) and into the inner section of the front protrusion (131) with a NPI-profile within the rear chassis (130) as to operate reciprocally with the pinion gears (202-203).

The front chassis (110) is connected to the front engagement cavity (111) of the central chassis (110) from the rear protrusion (121) thereof and the rear chassis (130) is connected to the rear engagement cavity (112) of the central chassis (110) from the front protrusion (131) thereof within the main chassis (100) of the container trailer.

When the container trailer is to be retracted, the front chassis (120) and the rear chassis (130) of the main chassis (100) move towards the central chassis (110) by the movement of the rack gears (205) on the pinion gears (202-203) together with the backward movement of the trailer. When the container trailer is to be extended, the front chassis (120) and the rear chassis (130) of the main chassis (100) move away from the central chassis (110) by the forward movement of the trailer. This is provided by the movement of the rack gears (205) on the pinion gears (202-203).

During the movement of the front and rear chassis (120-130) on the central chassis (110), the shaft (201) moves within the operating cavity (122) of the present invention on both of the chassis (120-130) and there is no friction of the metallic surfaces.

## Claims

1. A main chassis (100) having a central chassis (110), a front chassis (120) and a rear chassis (130) for container trailers used for transporting the containers of different sizes such as 20, 30, 40 and 45 feet, **characterized in that** the main chassis comprises the following which are configured to provide extending and retracting of the container trailer synchronously with the movement of the trailer:
- an operating cavity (122) formed on the upper and lower sections of the rear protrusion (121) within the front chassis (120),
- an operating cavity (122) formed on the upper and lower sections facing each other of the NPI profile-shaped rear protrusions (131) of the rear chassis (130),
- a mechanical extension assembly (200) providing the extension/retraction of the main chassis (100) by, in a synchronous way with the movement of the trailer, the forward/backward movement of the front chassis (120) which is connected to the front engagement cavity (111) within the central chassis (110) from the rear protrusion (121) thereof and the rear chassis (130) which is connected to the rear engagement cavity (112) within the central chassis (110) from the front protrusion (131) thereof by the movement of the rack gears (205) which are individually connected to the inner section of the rear protrusion (121) within the front chassis (120) and to the inner sections of the front protrusion (131) with a NPI-profile within the rear chassis (130) on the side pinion gears (202) and the central pinion gears (203) which are located on the shaft (201) connected to the central inner section of the central chassis (110) through the bearings (204).
